(19) Europäisches Patentamt
European Patent Office
Office européen des brevets

(11) **EP 3 886 510 A1**

(12) **EUROPEAN PATENT APPLICATION**
published in accordance with Art. 153(4) EPC

(43) Date of publication:
**29.09.2021 Bulletin 2021/39**

(51) Int Cl.:
***H04W 64/00*** (2009.01)

(21) Application number: **19887006.5**

(22) Date of filing: **21.11.2019**

(86) International application number:
**PCT/CN2019/119975**

(87) International publication number:
**WO 2020/103908 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.11.2018 CN 201811407465**

(71) Applicant: **ZTE Corporation**
**Shenzhen, Guangdong 518057 (CN)**

(72) Inventors:
• **PU, Lihong**
**Shenzhen, Guangdong 518057 (CN)**
• **ZENG, Gang**
**Shenzhen, Guangdong 518057 (CN)**
• **ZHOU, Gongcai**
**Shenzhen, Guangdong 518057 (CN)**

(74) Representative: **Brunazzi, Stefano**
**Jacobacci & Partners S.p.A.**
**Via Senato, 8**
**20121 Milano (IT)**

(54) **TERMINAL POSITION DETERMINATION METHOD AND DEVICE, AND STORAGE MEDIUM**

(57) Provided are a method and device for determining a position of a terminal, and a storage medium, which can solve the problem in the related art that the positioning accuracy in positioning a terminal is relatively low. The method includes: acquiring one or more measurement parameters of base stations from a positioning measurement report of the terminal; respectively inputting the one or more measurement parameters corresponding to the base stations into the distance estimation models of the respective base stations, to obtain a plurality of estimation values of distances between the respective base stations and the terminal, wherein the distance estimation models are obtained by performing training based on one or more historical measurement parameters of the respective base stations and one or more measured distances between the respective base stations and one or more terminals; and determining the position of the terminal according to the plurality of estimation values of distances between the respective base stations and the terminal.

Acquire one or more measurement parameters of base stations from a positioning measurement report of a terminal — 101

Respectively input the one or more measurement parameters corresponding to the base stations into distance estimation models of the respective base stations, to obtain a plurality of estimation values of distances between the respective base stations and the terminal — 102

Determine a position of the terminal according to the plurality of estimation values of distances between the respective base stations and the terminal — 103

**Fig. 1**

# Description

## Cross-Reference to Related Application

The present disclosure claims priority of Chinese Patent Application No. CN 201811407465.3 filed on November 23, 2018 and entitled "Method and Device for Determining Position of Terminal, and Storage Medium", and the whole disclosure of which is incorporated herein by reference.

## Technical Field

The present disclosure relates to the technical field of communications, and more particularly, to a method and a device for determining a position of a terminal, and a storage medium.

## Background

At present, a base station positioning flow in a wideband code division multiple access (WCDMA) network generally includes the following operations 1 to 6.

In operation 1, a service provider (SP) initiates a positioning request which carries information of a target terminal that needs to be positioned. In operation 2, a gateway mobile location center (GMLC) authenticates the positioning request, etc., and triggers the positioning request to a core network. In operation 3, after receiving the positioning request, the core network performs routing determination, and then sends a positioning request (e.g. POSITION INITIATION REQUEST) to a Stand-Alone Service mobile position center (SMLC) (SAS). In operation 4, after receiving the positioning request, the SAS triggers a measurement request (e.g. POSITION ACTIVATION REQUEST). In operation 5, the SAS receives a measurement report (e.g. POSITION ACTIVATION RESPONSE), when multiple measurement procedures are allowed to be performed, the operations of triggering the measurement request and receiving the measurement report may be repeated. In operation 6, after receiving the measurement report, the SAS positions and estimates the position of the terminal, and finally returns an estimated positioning result to a position initiation response; after receiving the positioning result, the GMLC returns a response to the SP, and the positioning process ends.

The positioning method only performs positioning on the basis of measurement information of a single base station, and the positioning accuracy is relatively low and can only be used as the most basic positioning capability.

## Summary

Provided are a method and a device for determining a position of a terminal, and a storage medium, which can solve the problem in the related art that the accuracy of positioning a terminal is relatively low.

According to a first aspect of the embodiments of the present disclosure, a method for determining a position of a terminal is provided. The method includes: acquiring one or more measurement parameters of base stations from a positioning measurement report of the terminal; respectively inputting the one or more measurement parameters corresponding to the base stations into the distance estimation models of the respective base stations, to obtain a plurality of estimation values of distances between the respective base stations and the terminal, wherein the distance estimation models are obtained by performing training based on one or more historical measurement parameters of the respective base stations and one or more measured distances between the respective base stations and one or more terminals; and determining the position of the terminal according to the plurality of estimation values of distances between the respective base stations and the terminal.

According to a second aspect of the embodiments of the present disclosure, a device for determining a position of a terminal is provided. The device includes: an acquisition module, configured to acquire one or more measurement parameters of base stations from a positioning measurement report of the terminal; an input module, configured to respectively input the one or more measurement parameters corresponding to the base stations into the distance estimation models of the respective base stations, to obtain a plurality of estimation values of distances between the respective base stations and the terminal, wherein the distance estimation models are obtained by performing training based on one or more historical measurement parameters of the respective base stations and one or more measured distances between the respective base stations and one or more terminals; and a determination module, configured to determine the position of the terminal according to the plurality of estimation values of distances between the respective base stations and the terminal.

According to a third aspect of the embodiments of the present disclosure, a device for determining a position of a terminal is provided. The device includes: a processor; a memory for storing instructions executable by the processor. When the instructions are executed by the processor, the following operations are executed: acquiring one or more measurement parameters of base stations from a positioning measurement report of the terminal; respectively inputting the one or more measurement parameters corresponding to the base stations into the distance estimation models of the respective base stations, to obtain a plurality of estimation values of distances between the respective base stations and the terminal, wherein the distance estimation models are obtained by performing training based on one or more historical measurement parameters of the respective base stations and one or more measured distances between the respective base stations and one or more terminals; and determining the position of the terminal according to the plurality of estimation values of distances between the respective base stations and the terminal.

According to a fourth aspect of the embodiments of the present disclosure, a non-transitory computer-readable storage medium is provided. Instructions in the non-transitory computer-readable storage medium, when being executed by a processor, cause the processor to execute the method according to the first aspect of the embodiments of the present disclosure.

**Brief Description of the Drawings**

Fig. 1 is a flowchart illustrating a method for determining a position of a terminal according to an exemplary embodiment;

Fig. 2 is a flowchart illustrating a method for determining a position of a terminal according to an exemplary embodiment;

Fig. 3 is an effect diagram illustrating a distance between a terminal and a base station obtained on the basis of the one or more measurement parameters of base stations 30104 according to an exemplary embodiment;

Fig. 4 is a diagram illustrating the linear regression fitting of base stations 30104 according to an exemplary embodiment;

Fig. 5 is an effect diagram illustrating a distance between a terminal and a base station obtained on the basis of the one or more measurement parameters of base stations 32924 according to an exemplary embodiment;;

Fig. 6 is a diagram illustrating the linear regression fitting of base stations 32924 according to an exemplary embodiment;

Fig. 7 is an effect diagram illustrating a distance between a terminal and a base station obtained on the basis of the one or more measurement parameters of base stations 34465 according to an exemplary embodiment;

Fig. 8 is a diagram illustrating the linear regression fitting of base stations 34465 according to an exemplary embodiment;

Fig. 9 is an effect diagram illustrating a distance between a terminal and a base station obtained on the basis of the one or more measurement parameters of base stations 33876 according to an exemplary embodiment;

Fig. 10 is a diagram illustrating the linear regression fitting of base stations 33876 according to an exemplary embodiment;

Fig. 11 is a block diagram illustrating a device for determining a position of a terminal according to an exemplary embodiment; and

Fig. 12 is a block diagram illustrating a device for determining a position of a terminal according to an exemplary embodiment.

**Detailed Description of the Embodiments**

The technical solutions in the embodiments of present disclosure will be described hereinafter in a clear and complete manner in conjunction with the drawings and embodiments. Obviously, the following embodiments are merely a part of, rather than all of, the embodiments of the present disclosure. Based on the embodiments of the present disclosure, all the other embodiments that a person having ordinary skill in the art obtains without inventive effort are within the scope of the present disclosure.

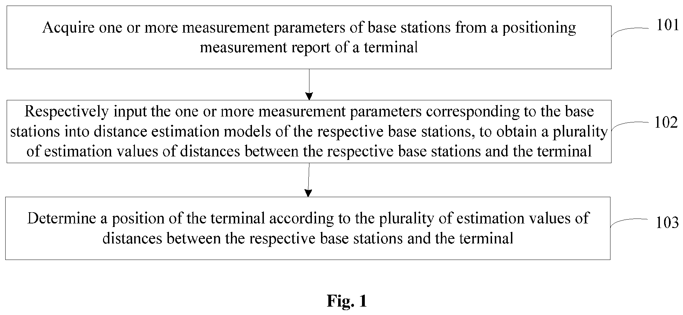

Fig. 1 is a flowchart illustrating a method for determining a position of a terminal according to an exemplary embodiment. As shown in Fig. 1, the method includes the following operations.

In operation 101, one or more measurement parameters of base stations are acquired from a positioning measurement report of the terminal.

The positioning measurement report may be obtained by means of measurement by the terminal. The positioning measurement report is also referred to as a Cell-ID Measured Results Info List, which includes information of a serving cell where the measurement terminal is located and the base stations of neighbor cells. The positioning measurement report may include one or more measurement parameters of a plurality of base stations. The one or more measurement parameters are, for example, one or more wireless measurement parameters of a 3G base station. The fields of the base stations obtained by means of measurement can be parsed according to a corresponding communication protocol, and the one or more measurement parameters obtained by parsing may include one or more parameters of Received Signal Code Power (RSCP), a Radio Network Controller (RNC) ID, the identifier of a cell in a base station (CELL ID), Round-Trip Time (RTT) and an RTT difference.

In operation 102, the one or more measurement parameters corresponding to the base stations are respectively input into the distance estimation models of the respective base stations, to obtain a plurality of estimation values of distances between the respective base stations and the terminal. The distance estimation models are obtained by performing training based on one or more historical measurement parameters of the respective base stations and one or more measured distances between the respective base stations and one or more terminals.

The distance estimation model may be, for example, a linear regression model. The distance estimation model may search, on the basis of the concept of big data, for combination parameters between a plurality of historical measurement parameters of the same base station, and the distance estimation model may be established by approximately simulating a relationship between dependent variables and variables. Assuming that the measurement parameters RSCP, Ec/N0, Pathloss and the measured distance (the measured distance between a base station and a terminal) are known, linear combination parameters (i.e. the corresponding coefficients of the measurement parameters in the relational expression) can be calculated by means of a linear regression model to obtain optimal linear combination parameters, thereby obtaining a linear regression model of the base station. The RSCP represents the signal strength received from a base station by a terminal, Ec/N0 represents an interference level of the received signal strength, and Pathloss represents a path loss, which is also referred to as communication path loss. In addition, in order to improve the accuracy of a distance calculated by the distance estimation model, the distance estimation model can be established on the basis of one or more measurement parameters in the positioning measurement report obtained by means of multiple measurements, and the distance estimation model can be continuously updated using one or more measurement parameters subsequently collected.

In operation 103, the position of the terminal is determined according to the plurality of estimation values of distances between the respective base stations and the terminal.

In operation 103, the position information of the terminal may be calculated on the basis of the distance between each base station and the terminal by using a triangulation algorithm. Therefore, the accuracy of the measured distance, participating in the positioning computation, between the base station and the terminal directly affects the positioning accuracy. However, due to the features of the 3G network, the distance between the base station and the terminal cannot be directly obtained, and can only be indirectly calculated by means of one or more parameters such as signal strength RSCP. Therefore, accurately estimating the distance between the base station and the terminal by using the linear regression model can effectively improves the positioning accuracy of the positioning algorithm.

In an exemplary implementation, the distance estimation model can be established in advance. Based on this, the method for determining the position of the terminal may further include the following operations. Before inputting the one or more measurement parameters corresponding to the base stations into the distance estimation models of the respective base stations, a linear regression relational expression is established based on a linear relationship between the one or more historical measurement parameters of each base station and the one or more measured distances between the base station and the one or more terminals, wherein in the linear regression relational expression, each historical measurement parameter respectively corresponds to one linear parameter. A value of each linear parameter is calculated according to a value of each historical measurement parameter and a value of each measured distance, to obtain the distance estimation model of the base station. All linear parameters in the linear regression relational expression are also referred to combination parameters. The one or more historical measurement parameters may include at least one of the following: a signal strength of a base station received by a terminal, an interference of the signal strength received by the terminal, and a communication path loss. These parameters may be obtained from a call detail record by reading the call detail record. For example, the call detail record may include parameters such as RNC ID, CELL ID, RSCP, RTT and RTT Difference. The validity of measurement parameters of each base station is checked, when the measurement parameter of a certain base station is incorrect, it is determined that the measurement parameter of the base station is an invalid parameter, and this parameter does not participate in the training process of the distance estimation model. The distance estimation model corresponding to each base station is trained on the basis of the obtained measurement parameters of each base station. In addition, in the process of using the distance estimation model, the distance estimation model corresponding to each base station may be updated according to the subsequently collected measurement parameters of each base station, so as to further improve the accuracy of the distance estimation model.

The process of establishing the distance estimation model is described below based on an example. In the example, the distance between the base station and the terminal is determined by a plurality of measurement parameters, such as RSCP, Ec/N0, and Pathloss. Thus, a linear regression model is established according to the three determination factors of distance (1, RSCP, Ec/N0, Pathloss), and the weights of influence of the measurement parameters is ($\theta_0$, $\theta_R$, $\theta_E$, $\theta_P$).

The linear regression function is constructed as follows:

$$h(\theta) = \theta_0 + \theta_R x_R + \theta_E x_E + \theta_P x_P + ... = \theta^T x .$$

In the equation above, $h(\theta)$ is a distance between a base station and a terminal, and x is a column vector ($x_R$, $x_E$, $x_P$... $x_n$)$^T$, which can represent influence factors of a regression function. For example, $x_R$, $x_E$ and $x_P$ can respectively represent RSCP, Ec/N0 and Pathloss in sequence, and $\theta^T$ can be a row vector ($\theta_0$, $\theta_R$, $\theta_E$, $\theta_P$), which represents the weight coefficients of the influence factors.

The loss function is constructed as follows:

$$J(\theta) = \frac{1}{2m} \sum_{i=0}^{m} (h_\theta(x^{(i)}) - y^{(i)})^2 .$$

In the loss function, $x^{(i)}$ represents the ith element in vector x; $y^{(i)}$ represents the ith element in vector y; $h_\theta(x^{(i)})$ represents a known hypothetical function; and m is the number of training sets.

With this loss function, the deviation of the distance obtained by the linear regression function can be calculated.

The estimation process of the linear regression parameters in the linear regression model may include the following operations.

In the linear regression model, parameter a may be used to represent $\theta$, and parameter b may be used to represent $(x_R, x_E, x_P ... x_n)$. Parameters a and b are both unknown numbers, and need to be calculated according to sample data $(x_i, y_i)$. The principle for determining the values of parameters a and b is to best fit the regression line of the sample to the observed value, i.e., to minimize the deviation of the estimated value of the distance between the terminal and the base station from the actually measured value. For this, the optimal parameters can be sought using a least squares method.

When seeking optimal parameters on the basis of the least squares method, a $y_i$ corresponding to each $x_i$ can be calculated according to the linear regression equation, and is an estimated value of $y_i$. The deviation between the estimated value and the actually measured value, ei = $(y_i - \hat{y}_i)$. There are n actually measured values which correspond to n deviations. To optimize the fitting state of the linear regression model, the sum of the n deviations needs to be minimized. For the convenience of calculation, the linear regression model may be determined by taking the sum of squares of errors being minimum as a standard. In this case, the Q value needs to be obtained as follows:

$$Q = \sum_{i=1}^{n} (y_i - \hat{y})^2 = \sum_{i=1}^{n} (y_i - a - bx_i)^2 .$$

Q is a minimum value, and according to the extreme value theorem in the calculus, for the extreme value of the equation, the partial derivatives of the equation with respect to a and b should be 0, so that the linear parameters above can be obtained.

In an exemplary implementation, the operation that the value of each linear parameter are calculated according to the value of each historical measurement parameter and the value of each measured distance may include the following operations. An optimal value of each linear parameter is obtained by a gradient descent method. The gradient descent method is an optimization algorithm, and is generally referred to as the steepest descent method. The steepest descent method uses a negative gradient direction as a search direction, the closer the steepest descent method to the target value, the smaller the step length, the slower the advancement. In the method for determining the position of the terminal, when a loss function is minimized, a gradient descent method may be used to perform iteration solution step by step, so as to obtain a minimized loss function and model parameter values. For example, when seeking an optimal parameter on the basis of a gradient descent method, the following operations may be included. A step size to a next step, referred to as Learning rate $\alpha$, is determined. Any given initial value, e.g., $(\theta_1, \theta_2, ... \theta_{n-1}, \theta_n)$, is provided. A downward direction is determined, the iteration moves downwards at a predetermined step, and $(\theta_1, \theta_2, ... \theta_{n-1}, \theta_n)$ is updated. The descending stops when the descending height is less than a certain defined value. In this algorithm, the step size is $\alpha$; gradient descent iteration is performed according to

$$\theta_i := \theta_i - \alpha \frac{\partial J(\theta)}{\partial \theta}$$

, so as to obtain $\theta_i := \theta_i - \alpha[h_\theta(x) - y]x^{(i)}$. When the calculation result of the iterative equation is less than a set threshold, an optimal parameter can be obtained.

According to the method for determining the position of the terminal in the embodiments of the present disclosure, the distance between a terminal and each base station is calculated according to an distance estimation model which is obtained by pre-training and corresponds to each base station, and then the terminal is positioned according to the distance between the terminal and each base station, thereby improving the positioning accuracy of the terminal.

In an exemplary implementation, as a plurality of sectors may be deployed under the same base station, one or more measurement parameters obtained in different sectors deployed under the same base station may be combined as the one or more measurement parameters of the base station. Based on this, the operation that the one or more measurement parameters of base stations are acquired from the positioning measurement report of the terminal may include the following operation. Measurement parameters of sectors having the same longitude and latitude are combined as one or more measurement parameters of the same base station according to the RNC ID or the CELL ID in the positioning measurement report.

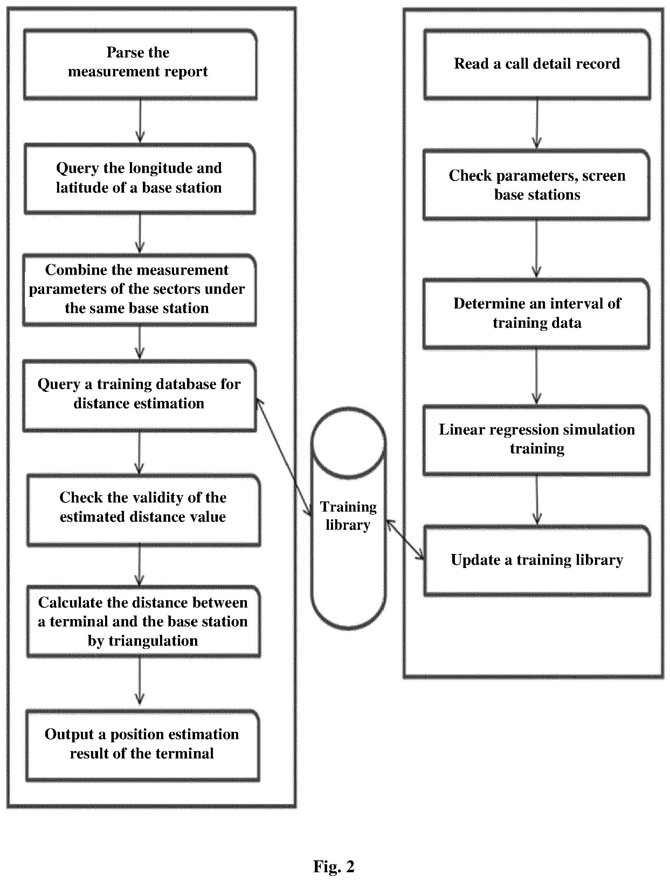

The flow of determining the position of the terminal on the basis of the method for determining the position of the terminal will be exemplarily illustrated below with reference to Fig. 2. In the method shown in Fig. 2, the measurement parameter being RSCP is taken as an example. As shown in Fig. 2, the flow may include the following operations.

A positioning measurement report is acquired, wherein the positioning measurement report may include one or more measurement parameters of a plurality of base stations. According to a corresponding protocol, parameters such as RSCP/RNCID/CELLID/RTT/RTTDifference can be obtained by parsing the fields of the measurement parameters of each base station.

According to RNC ID/CELL ID of each base station obtained from the positioning measurement report, the longitude and latitude of each base station are queried, the measurement parameters corresponding to sectors with the same longitude and latitude are combined into one or more measurement parameters of a base station, and are taken as the one or more measurement parameters of the base station to be used in the positioning calculation.

According to a signal strength RSCP value measured for each base station in the positioning measurement report, a training library is queried to obtain a training estimated distance value S. The training library may include historical measurement parameters, and the value of the distance between the terminal and the base station calculated on the basis of the historical parameters, and may further include the distance estimation model. When the training library is queried, the distance estimation model may be used to calculate the distance between the terminal and the base station. In this operation, an estimated distance value Sn needs to be calculated for each base station in the positioning measurement report.

The validity of the estimated distance value Sn is checked, for example, the validity of the estimated distance value may be checked according to the longitude, latitude and estimated distance value Sn of the base station. A base station corresponding to an invalid estimated distance value does not participate in the positioning calculation.

The position of the terminal is estimated by means of triangulation calculation.

The estimated positioning result of the terminal is output.

The method for determining the position of the terminal is further described based on an example.

In this example, training data (the one or more historical measurement parameters) used for training the distance estimation model are derived from actually measured parameters of a 3G base station. In this example, the distance estimation model is mainly constructed by a relationship between an RSCP and a measured distance. The format of the collected data is, for example, (CELLID, RNC ID, RADIUS, RSCP), wherein the CELL ID/RNC ID uniquely identifies a base station, RADIUS represents a measured time delay from the terminal to the base station, based on which the distance can be obtained calculation, and RSCP represents the signal strength received by the terminal at that point. The training data, for example, may take the one or more measurement parameters of base stations 30104, 32924, 34465 and 33876, etc. as a reference, and about 1000 radio measurement parameters may be collected for each base station.

It is stated above that the regression parameters can be estimated based on a least squares method, a gradient descent method, etc.. Compared with the least squares method, the gradient descent method can be realized by recursion of a preset step size. In the method for determining the position of the terminal, a gradient descent method is used to estimate a regression parameter of the distance estimation model, so as to improve the optimization effect of the system.

The practicability of the method for determining the position of the terminal according to an embodiment of the present disclosure is demonstrated by a Python coding linear regression model on the basis of field data.

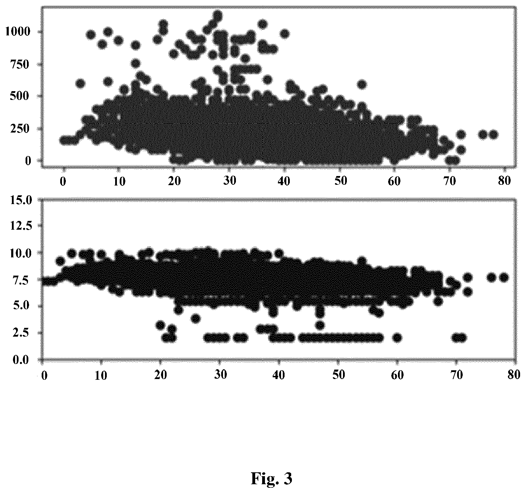

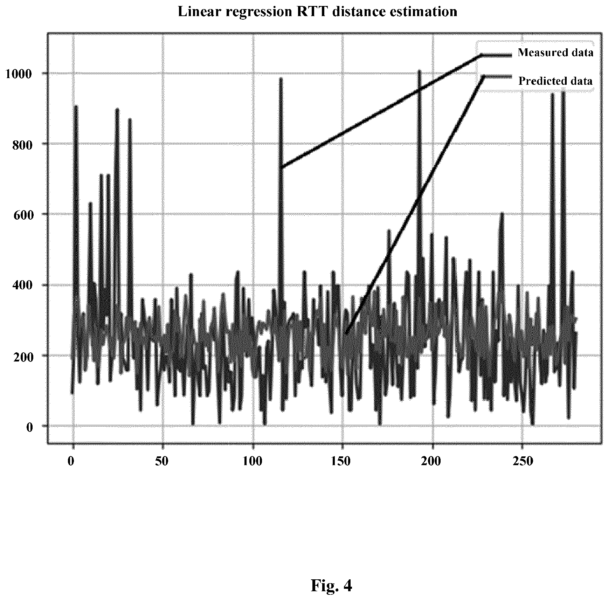

Fig. 3 shows an effect diagram illustrating a distance between a terminal and a base station obtained based on a measurement parameter of base stations 30104 and the method for determining the position of the terminal according to the embodiments of the present disclosure. In Fig. 3, the horizontal axis represents a signal strength RSCP, and the longitudinal axis represents a distance between the terminal and the base station. It can be seen from Fig. 3 that data points are mainly distributed in an interval of signal strength of 20 to 60 dB, that is, a terminal of which the signal strength is in the interval of 20 to 60 dB can be positioned. The linear regression fitting chart of the base station is shown in Fig. 4, and the error of fitting is 164.403052879. In Fig. 4, the horizontal axis represents the sample points, and the longitudinal axis represents the loss function error. The curve A represents a pre-estimated value calculated by the linear regression estimation model, and the curve B represents an actually measured value.

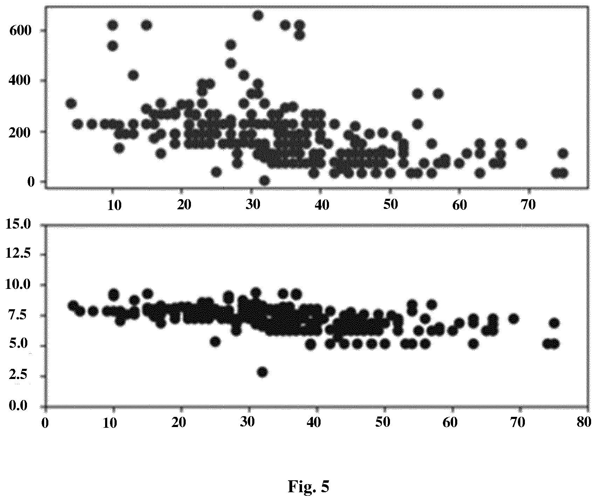

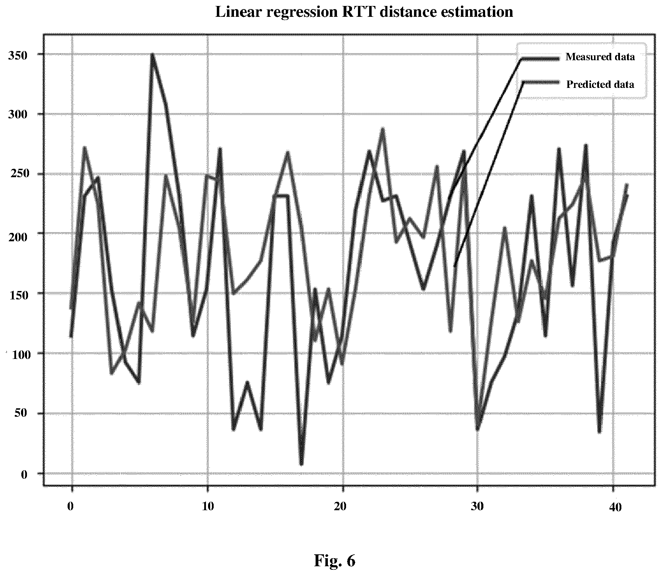

Fig. 5 shows an effect diagram illustrating a distance between a terminal and a base station obtained based on the one or more measurement parameters of base stations 32924 and the method for determining the position of the terminal according to the embodiments of the present disclosure. A linear regression fitting chart of the base station is as shown in Fig. 6, and the error of fitting is 76.500434572.

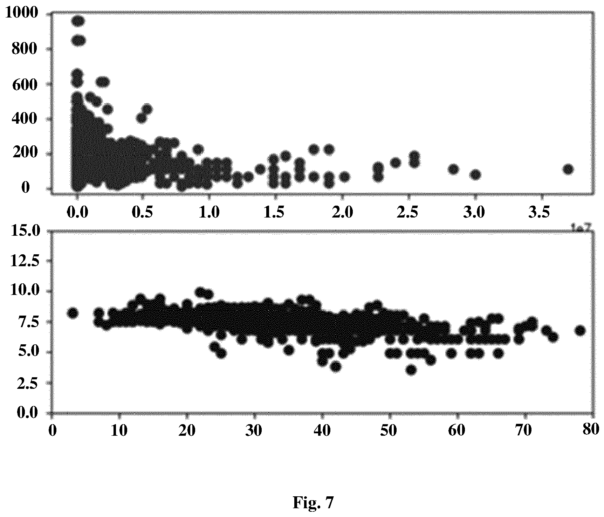

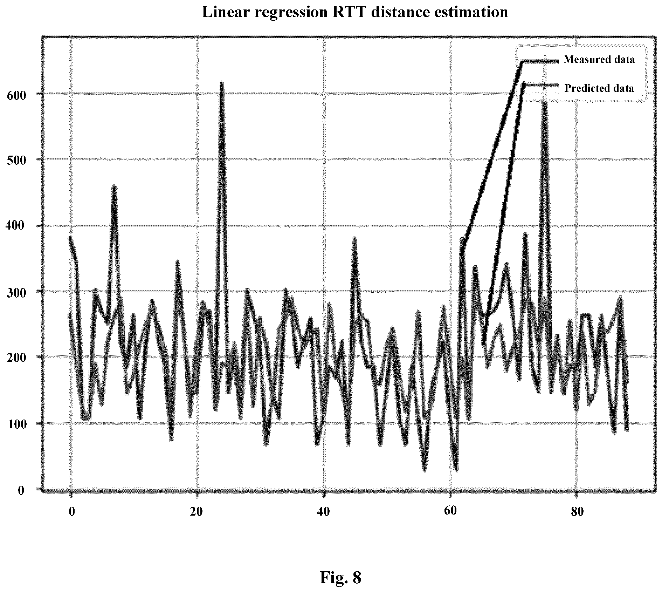

Fig. 7 shows an effect diagram illustrating a distance between a terminal and a base station obtained based on the one or more measurement parameters of base stations 34465 and the method for determining the position of the terminal according to the embodiments of the present disclosure. The linear regression fitting of the base station is as shown in Fig. 8, and the error of fitting is 97.8078453185.

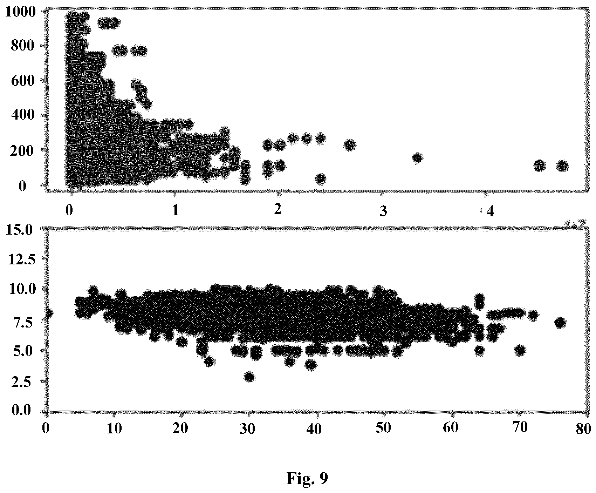

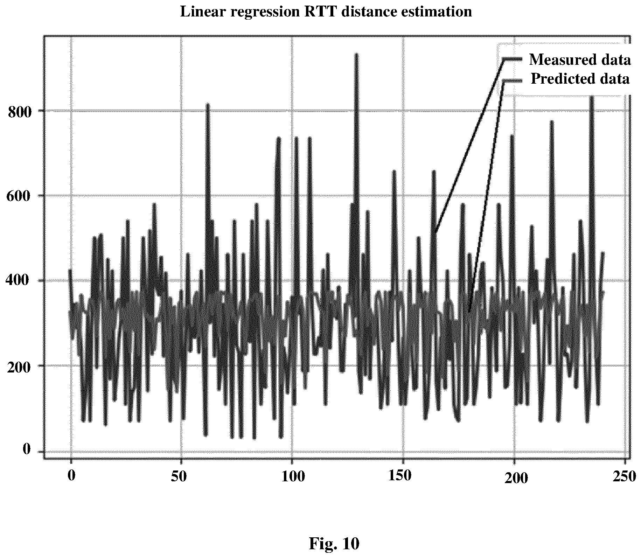

Fig. 9 shows an effect diagram illustrating a distance between a terminal and a base station obtained based on the one or more measurement parameters of base stations 33876 and the method for determining the position of the terminal according to the embodiments of the present disclosure. The linear regression fitting of the base station is as shown in Fig. 10, and the error of fitting is 353.987710441.

In Figs. 3, 5, 7 and 9, an error of fitting between a constructed distance estimation model and an actually measured value is between 50 to 400, and it can be considered that the distance estimation model is close to the actually measured value. Therefore, the distance estimation model can be used for calculating an estimated distance in the positioning process of the terminal. However, in a scenario where an error of fitting is large, a further optimization needs to be performed.

In Fig. 4, Figs. 6, 8 and 10, as the signal strength increases, the distance between the terminal and the base station all shows a decreasing trend.

As can be seen from Figs. 3, 5 and 7 respectively showing the relationship for base stations 30104, base stations 32924, and base stations 34465, as the signal strength increases, the distance between the terminal and the base station tends to decrease dispersedly.

As can be seen from Fig. 10 which shows the relationship diagram between base stations 33876 and the RSCP, as the signal strength increases, the distance between the terminal and the base station tends to decrease intensively.

Comparing Figs. 4, 6 and 8 with Fig. 10, the following conclusion can be obtained. As the signal strength increases, compared with the linear regression function obtained by fitting of the distance relationship between the terminal and the base station which decreases intensively, the linear regression function obtained by fitting of the distance relationship between the terminal and the base station which decreases dispersedly is closer to the actually measured value.

According to the above theoretical analysis, the distance estimation model based on a gradient descent method has a convergent linear regression function, which fits the relationship between the signal strength of the base station and the distance.

Based on the measurement data of the base station, a regression parameter is trained in combination with a distance estimation model, and an error between a distance value obtained based on the distance estimation model and an actually measured value is verified and analyzed. Based on the verification, it can be concluded that the accuracy of the distance value obtained based on the distance estimation model is relatively high.

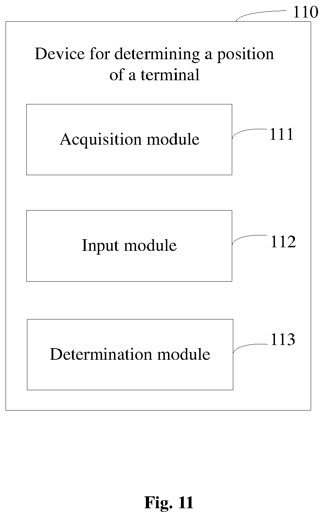

Fig. 11 is a block diagram illustrating a device for determining a position of a terminal according to an exemplary embodiment. As shown in Fig. 11, the device 110 includes: an acquisition module 111, configured to acquire one or more measurement parameters of base stations from a positioning measurement report of the terminal; an input module 112, configured to respectively input the one or more measurement parameters corresponding to the base stations into the distance estimation models of the respective base stations, to obtain a plurality of estimation values of distances between the respective base stations and the terminal, wherein the distance estimation models are obtained by performing training based on one or more historical measurement parameters of the respective base stations and one or more measured distances between the respective base stations and one or more terminals; and a determination module 113, configured to determine the position of the terminal according to the plurality of estimation values of distances between the respective base stations and the terminal.

In an exemplary implementation, the device for determining the position of the terminal may further include: an establishment module, configured to establish, before inputting the one or more measurement parameters corresponding to the base stations into the distance estimation models of the respective base stations, a linear regression relational expression based on a linear relationship between the one or more historical measurement parameters of each base station and the one or more measured distances between the base station and the one or more terminals, wherein in the linear regression relational expression, each historical measurement parameter respectively corresponds to one linear parameter; and a calculation module, configured to calculate a value of each linear parameter according to a value of each historical measurement parameter and a value of each measured distance, to obtain the distance estimation model of the base station.

In an exemplary implementation, the calculation module is configured to obtain an optimal value of each linear parameter by a gradient descent method.

In an exemplary implementation, the one or more historical measurement parameters may include at least one of the following: a signal strength of a base station received by a terminal, an interference of the signal strength received by the terminal, and a communication path loss.

In an exemplary implementation, the acquisition module may be configured to: according to the RNC ID or CELL ID in the positioning measurement report, combine measurement parameters of sectors having the same longitude and latitude as the one or more measurement parameters of the same base station.

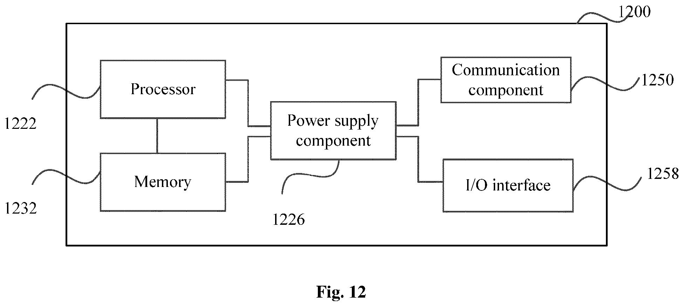

Fig. 12 is a block diagram illustrating a device for determining a position of a terminal according to an exemplary embodiment. For example, the device 1200 may be provided as a server. Referring to Fig. 12, the device 1200 includes one or more processors 1222 and a memory 1232 for storing a computer program executable by the processor 1222. A computer program stored in the memory 1232 may include one or more modules that each corresponds to a set of instructions. In addition, the processor 1222 may be configured to execute the computer program, so as to execute the method for determining the position of the terminal.

In addition, the device 1200 may further include a power supply component 1226 and a communication component 1250. The power supply component 1226 may be configured to execute power management of the device 1200. The communication component 1250 may be configured to implement communication of the device 1200, for example, wired or wireless communications. In addition, the device 1200 may also include an input/output (I/O) interface 1258. The device 1200 may operate on an operating system stored in the memory 1232, such as Windows ServerTM, Mac OS XTM, UnixTM and LinuxTM.

In another exemplary embodiment, a non-transitory computer-readable storage medium including program instructions is also provided, for example, a memory 1232 including program instructions, and the program instructions can be executed by the processor 1222 of the device 1200 to implement the method for determining the position of the terminal.

The beneficial effects of the embodiments of the present disclosure are as follows. According to the method for determining the position of the terminal in the embodiments of the present disclosure, the distance between a terminal and each base station is calculated according to an distance estimation model, which is obtained by pre-training, corresponding to each base station, and then the terminal is positioned according to the distance between the terminal and each base station, thereby improving the positioning accuracy of the terminal.

Although the exemplary embodiments of the present disclosure are disclosed for illustrative purposes, those having ordinary skill in the art will appreciate that various modifications, additions and substitutions are possible, and thus the scope of the present disclosure should not be limited to the above embodiments.

**Claims**

1. A method for determining a position of a terminal, comprising:

   acquiring one or more measurement parameters of base stations from a positioning measurement report of the terminal;
   respectively inputting the one or more measurement parameters corresponding to the base stations into distance estimation models of the respective base stations, to obtain a plurality of estimation values of distances between the respective base stations and the terminal, wherein the distance estimation models are obtained by performing training based on one or more historical measurement parameters of the respective base stations and one or more measured distances between the respective base stations and one or more terminals; and
   determining the position of the terminal according to the plurality of estimation values of distances between the respective base stations and the terminal.

2. The method according to claim 1, further comprising:

before inputting the one or more measurement parameters corresponding to the base stations into the distance estimation models of the respective base stations, establishing a linear regression relational expression based on a linear relationship between the one or more historical measurement parameters of each base station and the one or more measured distances between the base station and the one or more terminals, wherein in the linear regression relational expression, each historical measurement parameter respectively corresponds to one linear parameter; and
calculating a value of each linear parameter according to a value of each historical measurement parameter and a value of each measured distance, to obtain the distance estimation model of the base station.

3. The method according to claim 2, wherein calculating the value of each linear parameter according to the value of each historical measurement parameter and the value of each measured distance comprises: obtaining an optimal value of each linear parameter by a gradient descent method.

4. The method according to claim 1, wherein the one or more historical measurement parameters comprise at least one of the following:

a signal strength of a base station received by a terminal, an interference of the signal strength received by the terminal, and a communication path loss.

5. The method according to any one of claims 1 to 4, wherein acquiring the one or more measurement parameters of the base stations from the positioning measurement report of the terminal comprises:

according to a radio network controller identifier (RNC ID) or a cell identifier (CELL ID) in the positioning measurement report, combining measurement parameters of sectors having the same longitude and latitude as the one or more measurement parameters of the same base station.

6. A device for determining a position of a terminal, comprising:

   an acquisition module, configured to acquire one or more measurement parameters of base stations from a positioning measurement report of the terminal;
   an input module, configured to respectively input the one or more measurement parameters corresponding to the base stations into the distance estimation models of the respective base stations, to obtain a plurality of estimation values of distances between the respective base stations and the terminal, wherein the distance estimation models are obtained by performing training based on one or more historical measurement parameters of the respective base stations and one or more measured distances between the respective base stations and one or more terminals; and

a determination module, configured to determine the position of the terminal according to the plurality of estimation values of distances between the respective base stations and the terminal.

7. The device according to claim 6, further comprising:

an establishment module, configured to establish, before inputting the one or more measurement parameters corresponding to the base stations into the distance estimation models of the respective base stations, a linear regression relational expression based on a linear relationship between the one or more historical measurement parameters of each base station and the one or more measured distances between the base station and the one or more terminals, wherein in the linear regression relational expression, each historical measurement parameter respectively corresponds to one linear parameter; and

a calculation module, configured to calculate a value of each linear parameter according to a value of each historical measurement parameter and a value of each measured distance, to obtain the distance estimation model of the base station.

8. The device according to claim 7, wherein the calculation module is configured to:
obtain an optimal value of each linear parameter by a gradient descent method.

9. The device according to claim 6, wherein the one or more historical measurement parameters comprise at least one of the following:
a signal strength of a base station received by a terminal, an interference of the signal strength received by the terminal, and a communication path loss.

10. The device according to any one of claims 6 to 9, wherein the acquisition module is configured to:
according to a radio network controller identifier (RNC ID) or a cell identifier (CELL ID) in the positioning measurement report, combine measurement parameters of sectors having the same longitude and latitude as the one or more measurement parameters of the same base station.

11. A device for determining a position of a terminal, comprising:

a processor; and
a memory for storing instructions executable by the processor;
wherein when the instructions are executed by the processor, the following operations are executed:

acquiring one or more measurement parameters of base stations from a positioning measurement report of the terminal;
respectively inputting the one or more measurement parameters corresponding to the base stations into distance estimation models of the respective base stations, to obtain a plurality of estimation values of distances between the respective base stations and the terminal, wherein the distance estimation models are obtained by performing training based on one or more historical measurement parameters of the respective base stations and one or more measured distances between the respective base stations and one or more terminals; and
determining the position of the terminal according to the plurality of estimation values of distances between the respective base stations and the terminal.

12. A non-transitory computer-readable storage medium, wherein instructions in the non-transitory computer-readable storage medium, when being executed by a processor, cause the processor to execute the method according to any one of claims 1 to 5.

Acquire one or more measurement parameters of base stations from a positioning measurement report of a terminal — 101

Respectively input the one or more measurement parameters corresponding to the base stations into distance estimation models of the respective base stations, to obtain a plurality of estimation values of distances between the respective base stations and the terminal — 102

Determine a position of the terminal according to the plurality of estimation values of distances between the respective base stations and the terminal — 103

**Fig. 1**

Parse the
measurement report

↓

Query the longitude and
latitude of a base station

↓

Combine the measurement
parameters of the sectors under
the same base station

↓

Query a training database for
distance estimation

↓

Check the validity of the
estimated distance value

↓

Calculate the distance between
a terminal and the base station
by triangulation

↓

Output a position estimation
result of the terminal

Read a call detail record

↓

Check parameters, screen
base stations

↓

Determine an interval of
training data

↓

Linear regression simulation
training

↓

Update a training library

Training
library

Fig. 2

Fig. 3

Linear regression RTT distance estimation

Fig. 4

Fig. 5

**Linear regression RTT distance estimation**

Fig. 6

Fig. 7

Linear regression RTT distance estimation

Fig. 8

Fig. 9

**Linear regression RTT distance estimation**

**Fig. 10**

110

Device for determining a position
of a terminal

Acquisition module 111

Input module 112

Determination module 113

**Fig. 11**

**Fig. 12**

## INTERNATIONAL SEARCH REPORT

| International application No. |
| --- |
| **PCT/CN2019/119975** |

| A. | CLASSIFICATION OF SUBJECT MATTER |
| --- | --- |
| | H04W 64/00(2009.01)i |

According to International Patent Classification (IPC) or to both national classification and IPC

| B. | FIELDS SEARCHED |
| --- | --- |

Minimum documentation searched (classification system followed by classification symbols)

H04W, H04Q7/-, H04L

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT, 3GPP: 终端, 移动台, 移动站, 位置, 定位, 距离, 测量, 训练, 线性; terminal, mobile station, location, position, distance, measure, training, linearity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101986757 A (ZTE CORPORATION) 16 March 2011 (2011-03-16) description, paragraphs [0002]-[0004] and [0020]-[0073], and figures 1-4 | 1-12 |
| A | CN 104181502 A (BEIHANG UNIVERSITY) 03 December 2014 (2014-12-03) entire document | 1-12 |
| A | CN 101529936 A (SONY CORPORATION) 09 September 2009 (2009-09-09) entire document | 1-12 |
| A | GB 2424139 A (AVAYA TECHNOLOGY LLC) 13 September 2006 (2006-09-13) entire document | 1-12 |
| A | CN 1413058 A (HUAWEI TECHNOLOGIES CO., LTD.) 23 April 2003 (2003-04-23) entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 January 2020** | **15 January 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/119975**

| Patent document cited in search report | | | Publication date (day/month/year) | Patent family member(s) | | | Publication date (day/month/year) |
|---|---|---|---|---|---|---|---|
| CN | 101986757 | A | 16 March 2011 | WO | 2012058960 | A1 | 10 May 2012 |
| | | | | CN | 101986757 | B | 29 October 2014 |
| CN | 104181502 | A | 03 December 2014 | None | | | |
| CN | 101529936 | A | 09 September 2009 | US | 2010317390 | A1 | 16 December 2010 |
| | | | | CA | 2666802 | A1 | 24 April 2008 |
| | | | | TW | 200825445 | A | 16 June 2008 |
| | | | | EP | 2073562 | A4 | 24 July 2013 |
| | | | | TW | I344548 | B | 01 July 2011 |
| | | | | JP | 4957174 | B2 | 20 June 2012 |
| | | | | AU | 2007311230 | B2 | 22 December 2011 |
| | | | | KR | 20090068334 | A | 26 June 2009 |
| | | | | EP | 2073562 | A1 | 24 June 2009 |
| | | | | HK | 1134202 | A1 | 19 April 2013 |
| | | | | KR | 101267947 | B1 | 24 May 2013 |
| | | | | WO | 2008047628 | A1 | 24 April 2008 |
| | | | | BR | PI0717770 | A2 | 05 November 2013 |
| | | | | US | 8145255 | B2 | 27 March 2012 |
| | | | | CN | 101529936 | B | 11 July 2012 |
| | | | | CA | 2666802 | C | 13 September 2016 |
| | | | | EP | 2073562 | B1 | 06 December 2017 |
| | | | | JP | 2008104029 | A | 01 May 2008 |
| | | | | AU | 2007311230 | A1 | 24 April 2008 |
| GB | 2424139 | A | 13 September 2006 | US | 7403784 | B2 | 22 July 2008 |
| | | | | DE | 102006009764 | A1 | 14 September 2006 |
| | | | | US | 2006205417 | A1 | 14 September 2006 |
| | | | | GB | 2424139 | B | 10 December 2008 |
| | | | | GB | 0603553 | D0 | 05 April 2006 |
| CN | 1413058 | A | 23 April 2003 | CN | 1202688 | C | 18 May 2005 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811407465